# EUROPEAN PATENT APPLICATION

(11) **EP 1 002 834 A1**
(43) Date of publication of application: **24.05.2000**
(21) Application number: 99121566.6
(22) Date of filing: 29.10.1999
(51) Int. Cl.: C08K 5/54, C08L 83/04

(54) **Silicone rubber composition for composite molding**

(30) Priority: 30.10.1998 JP 30932398; 16.11.1998 JP 32430798
(71) Applicant: Dow Corning Toray Silicone Company, Ltd., Chiyoda-ku, Tokyo 100-0005 (JP)
(72) Inventor: Takuman, Osamu, c/oDow Corning Co., Ltd., Ichibara-shi, Chiba Prefecture (JP); Yoshitake, Makoto, c/oDow Corning Co., Ltd., Ichibara-shi, Chiba Prefecture (JP); Nakamura, Akito, c/oDow Corning Co., Ltd., Ichibara-shi, Chiba Prefecture (JP)
(74) Representative: Spott, Gottfried, Dr.

(57) **Abstract**

A silicone rubber composition for composite molding comprising (A) a polydiorganosiloxane having at least two silicon atom-bonded alkenyl groups per molecule, (B) a polyorganosiloxane having at least two silicon atom-bonded hydrogen atoms per molecule, (C) 0.1 to 10 weight parts of a silatrane derivative described by general formula: 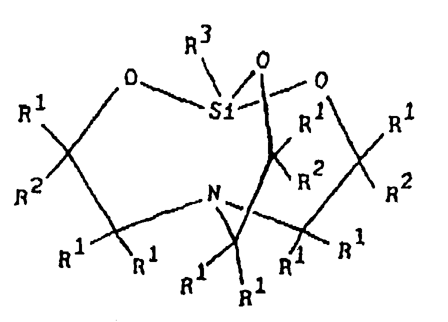 where each R¹ is independently selected from a hydrogen atom and an alkyl group; each R² is independently selected from the group consisting of a hydrogen atom, alkyl groups, and alkenyloxyalkyl groups expressed by the general formula -R⁴-O-R⁵ where R⁴ is an alkylene group and R⁵ is an alkenyl group; at least one R² group is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups, and (D) a platinum type catalyst.

## Description

### BACKGROUND OF INVENTION

The present invention relates to a silicone rubber composition for composite molding, such as insert molding or multi-color molding, and more particularly relates to a silicone rubber composition that provides superior adhesion to organic resins and superior mold release properties in such composite molding.

A method that has been adopted for bonding a silicone rubber to an organic resin in composite molding such as insert molding or multi-color molding involves priming a pre-molded organic resin and then curing it while it is brought together with a silicone rubber composition. The problems with this method are that a priming step is required and the adhesion of the silicone rubber is decrease if this priming treatment is inadequate.

In addition, to bond a silicone rubber securely to an organic resin, there are known methods involving the use of an organic resin containing aliphatic unsaturated groups (see Japanese Laid-Open Patent Applications 6-171021, 6-171022, and 6-171023), or methods featuring the use of a silicone rubber composition to which vinyltrimethoxysilane, 3-glycidoxypropyltrimethoxysilane, 3-methacryloxypropyltrimethoxysilane, or another such adhesion promoter has been added. A limitation to the former method, is that a special organic resin has to be used, while a problem with the latter method is that the mold release properties are decreased, and in extreme cases, the silicone rubber even adheres to the mold.

Specifically, it is an object of the present invention to provide a silicone rubber composition for composite molding that affords superior adhesion to organic resins and superior mold release properties in composite molding, such as insert molding or multi-color molding.

### SUMMARY OF INVENTION

A silicone rubber composition for composite molding comprising (A) a polydiorganosiloxane having at least two silicon atom-bonded alkenyl groups per molecule, (B) a polyorganosiloxane having at least two silicon atom-bonded hydrogen atoms per molecule, (C) 0.1 to 10 weight parts of a silatrane derivative described by general formula: 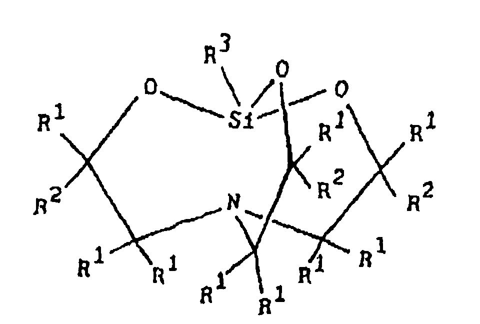 where each R¹ is independently selected from a hydrogen atom and an alkyl group; each R² is independently selected from the group consisting of a hydrogen atom, alkyl groups, and alkenyloxyalkyl groups expressed by the general formula -R⁴-O-R⁵ where R⁴ is an alkylene group and R⁵ is an alkenyl group; at least one R² group is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups, and (D) a platinum type catalyst in an amount sufficient to cure the composition.

### DESCRIPTION OF INVENTION

The present invention is a silicone rubber composition for composite molding comprising
(A) 100 weight parts of a polydiorganosiloxane having at least two silicon atom-bonded alkenyl groups per molecule;
(B) a polyorganosiloxane having at least two silicon atom-bonded hydrogen atoms per molecule in an amount such that the ratio of the number of moles of hydrogen atoms bonded to silicon atoms in this component to the number of moles of alkenyl groups bonded to silicon atoms in component (A) is between 0.5:1 and 20:1;
(C) 0.1 to 10 weight parts of a silatrane derivative described by formula: 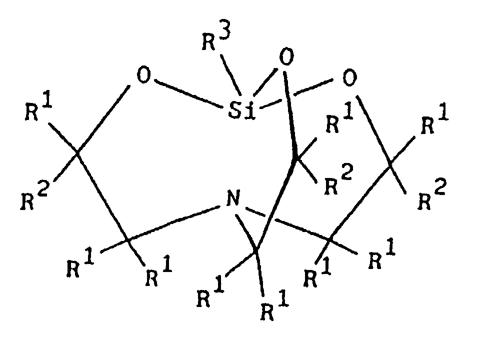 where each R¹ group is an independently selected hydrogen atom or alkyl group; each R² is independently selected from the group consisting of a hydrogen atom, alkyl groups, and alkenyloxyalkyl groups described by formula

   -R⁴-O-R⁵

   where R⁴ is an alkylene group and R⁵ is an alkenyl group; at least one R² group is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups; and
(D) a platinum type catalyst in an amount sufficient to cure the composition.

The silicone rubber composition for composite molding of the present invention will now be described in detail.

Component A is the principal component of the present composition, and is a polydiorganosiloxane having at least two silicon atom-banded alkenyl groups per molecule. The molecular structure of component A is substantially linear, but part of the molecular chain may have some branching. Examples of the silicon atom-bonded alkenyl groups include vinyl, allyl, butenyl, and propenyl. This alkenyl group may be bonded in any position, including the molecular chain terminals, pendant position, or bath. It is preferable for these alkenyl groups to be at least at the molecular chain terminals because the mechanical properties of the resulting silicone rubber will be better. Examples of silicon atom-bonded groups other than alkenyl groups which may be present in component A include substituted and unsubstituted monovalent hydrocarbon groups having no aliphatic unsaturated carbon-carbon bonds including for example alkyl groups such as methyl, ethyl, propyl, butyl, and octyl; aryl groups such as phenyl and tolyl; and substituted hydrocarbon groups such as chloromethyl and 3,3,3-trifluoropropyl. There are no restrictions on the viscosity of component A, but a range of 10 to 1,000,000 mPa · s at 25°C is preferable.

Examples of the polydiorganosiloxane comprising component A include a dimethylvinylsiloxy end-capped polydimethylsiloxane capped at bath ends of the molecular chain, a trimethylsiloxy end-capped dimethylsiloxane · methylvinylsiloxane copolymer capped at both ends of the molecular chain, a dimethylvinylsiloxy end-capped dimethylsiloxane · methylvinylsiloxane copolymer capped at both ends of the molecular chain, a dimethylvinylsiloxy end-capped dimethylsiloxane · methylphenylsiloxane copolymer capped at both ends of the molecular chain, a dimethylvinylsiloxy end-capped dimethylsiloxane · methyl(3,3,3,-trifluoropropyl)-siloxane copolymer capped at both ends of the molecular chain, a dimethylhexenylsiloxy end-capped polydimethylsiloxane capped at both ends of the molecular chain, a trimethylsiloxy end-capped dimethylsiloxane. dimethylhexenylsiloxane copolymer capped at both ends of the molecular chain, a dimethylhexenyloxy end-capped dimethylsiloxane · dimethylhexenylsiloxane copolymer capped at both ends of the molecular chain, a dimethylhexenyloxy end-capped dimethylsiloxane · methylphenylsiloxane copolymer capped at both ends of the molecular chain, and a dimethylhexenylsiloxy end-capped dimethylsiloxane · methyl(3,3,3,-trifluoropropyl)-siloxane copolymer capped at both ends of the molecular chain.

Component B acts as a cross-linking agent in the present composition, and is a polyorganosiloxane having at least two silicon atom-bonded hydrogen atoms per molecule. There are no restrictions on the molecular structure of component B, but examples include linear, linear with some branches, branched, cyclic, and resinous. Examples of groups that can be bonded to the silicon atoms of component B, besides the silicon atom-bonded hydrogen atoms, include alkyl groups such as methyl, ethyl, and propyl; aryl groups such as phenyl and tolyl; and halogenated alkyl groups such as chloromethyl, 3-chloropropyl, and 3,3,3-trifluoropropyl group. There are no restrictions on the viscosity of component B, but a range of 1 to 10,000 mPa · s at 25° C is preferable. When component A is a polydiorganosiloxane having two alkenyl groups per molecule, it is preferable for component B to include at least a polyorganosiloxane having three or more silicon atom-bonded hydrogen atoms per molecule, but when component A includes at least a polydiorganosioxane having three or more silicon atom-bonded alkenyl groups per molecule, component B may be composed of just a polyorganosiloxane having two silicon atom-bonded hydrogen atoms per molecule.

Examples of the polyorganosiloxane of component B include a trimethylsiloxy end-capped polymethylhydrogensiloxane capped at both ends of the molecular chain, a trimethylsiloxy end-capped dimethylsiloxane · methylhydrogensiloxane copolymer capped at both ends of the molecular chain, a dimethylhydrogensiloxy end-capped dimethylsiloxane · methylhydrogensiloxane copolymer capped at both ends of the molecular chain, a cyclic dimethylsiloxane · methylhydrogensiloxane copolymer, a cyclic polymethylhydrogensiloxane, an organosiloxane copolymer composed of siloxane units described by formula R₃SiO_{1/2} , siloxane units described by formula R₂HSiO_{1/2} , and siloxane units described by formula SiO_{4/2}; an organosiloxane copolymer composed of siloxane units described by formula R₂HSiO_{1/2} and siloxane units described by formula SiO_{4/2}; an organosiloxane copolymer composed of siloxane units described by formula RHSiO_{2/2} and siloxane units described by formula RSiO_{3/2} or siloxane units described by formula HSiO_{3/2}; and mixtures of two or more types of these polyorganosiloxanes. R in the above formulas is a substituted or unsubstituted monovalent hydrocarbon group with no aliphatic unsaturated carbon-carbon bonds, examples of which are the same groups as those listed above.

The amount in which component B is contained in this composition is such that the ratio of the number of moles of hydrogen atoms bonded to silicon atoms in this component to the number of moles of alkenyl groups bonded to silicon atoms in component A is between 0.5:1 and 20:1. This is because the resulting composition will tend not to cure sufficiently if the component B content is below the range given above, and because the mechanical strength of the resulting silicone rubber will tend to decrease if the above range is exceeded.

Component C serves to enhance the adhesion to organic resins, without adversely affecting the mold release properties of the present composition, and is a silatrane derivative described by the general formula: 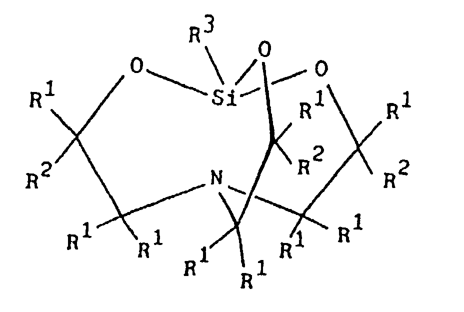 In the formula, each R¹ is an independently selected hydrogen atom or alkyl group. Examples of the alkyl group of R¹ include methyl, ethyl, propyl, butyl, pentyl, isopropyl, isobutyl, cyclopentyl, and cyclohexyl. It is particularly favorable for R¹ to be a hydrogen atom or a methyl group. Each R² in the above formula is independently selected from the group consisting of a hydrogen atom, alkyl groups, and alkenyloxyalkyl groups expressed by the general formula -R⁴-O-R⁵. At least one R² group must be an alkenyloxyalkyl group. Examples of the alkyl group of R² are the same as those given for R¹ above. With the alkenyloxyalkyl group of R², R⁴ in the formula is an alkylene group, examples of which include methylene, ethylene, methylmethylene, and propylene, with methylene being preferred. R⁵ in the above formula is an alkenyl group, examples of which include vinyl, allyl, butenyl, pentenyl, and hexenyl, with a C₃ to C₁₀ alkenyl group being preferable, and the allyl group being particularly favorable. R³ in the above formula is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups. Examples of the monovalent hydrocarbon group of R³ include alkyl groups such as methyl, ethyl, propyl, butyl, pentyl, isopropyl, cyclopentyl, and cyclohexyl; alkenyl groups such as vinyl, allyl, butenyl, pentenyl, and hexenyl; aryl groups such as phenyl, tolyl, and xylyl; aralkyl groups such as benzyl and phenethyl; and halogenated alkyl groups such as chloromethyl, 3-chloropropyl, and 3,3,3-trifluoropropyl. Examples of the alkoxy group of R³ include methoxy, ethoxy, and propoxy; examples of the glycidoxyalkyl group of R³ include the 3-glycidoxypropyl group; examples of the oxiranylalkyl group of R³ include 4-oxiranylbutyl and 8-oxiranylbutyl; examples of the acyloxyalkyl group of R³ include acetoxypropyl and 3-methacryloxypropyl; and examples of the aminoalkyl group of R³ include 3-aminopropyl and N-(2-aminoethyl)-3-aminopropyl.

The following compounds are examples of the silatrane derivative comprising component C.

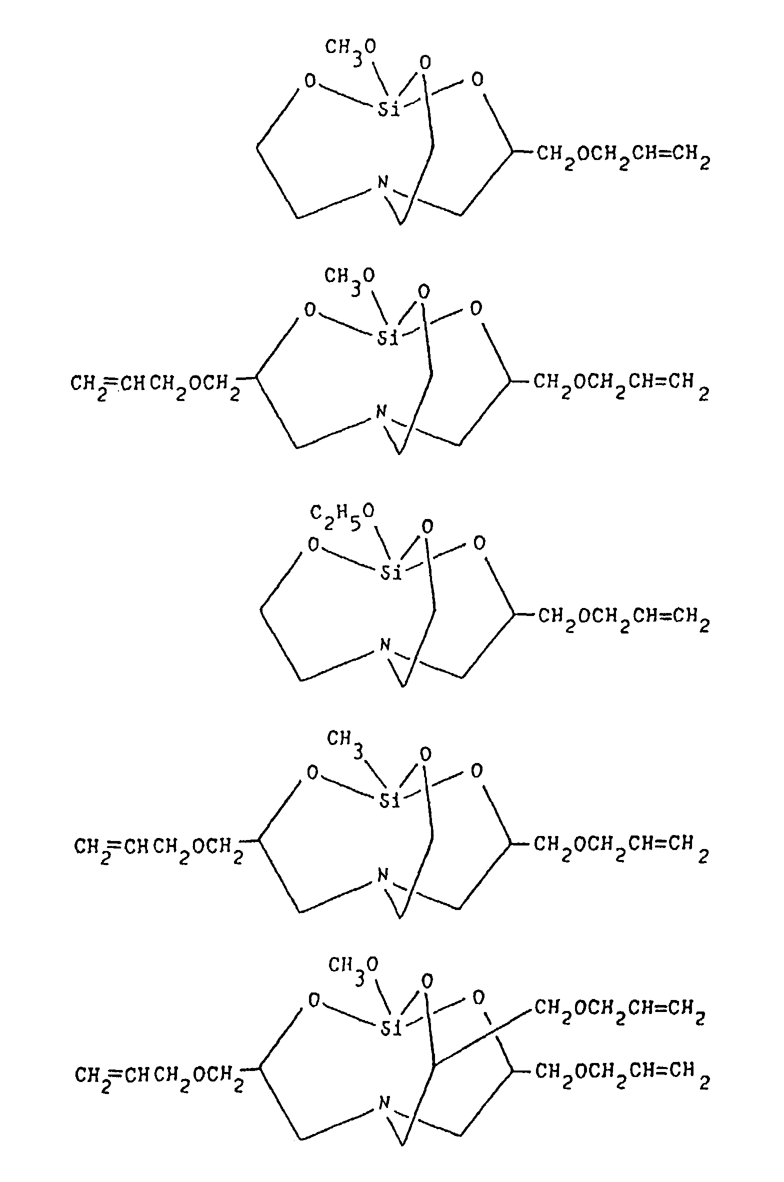

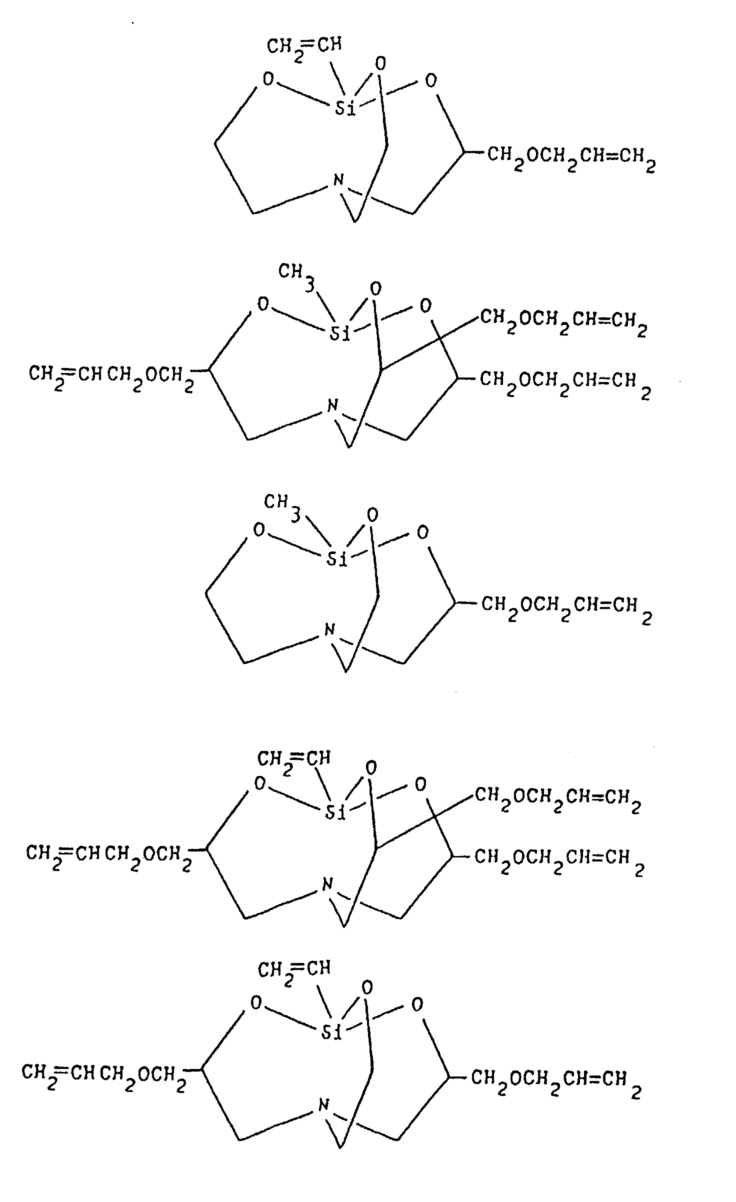

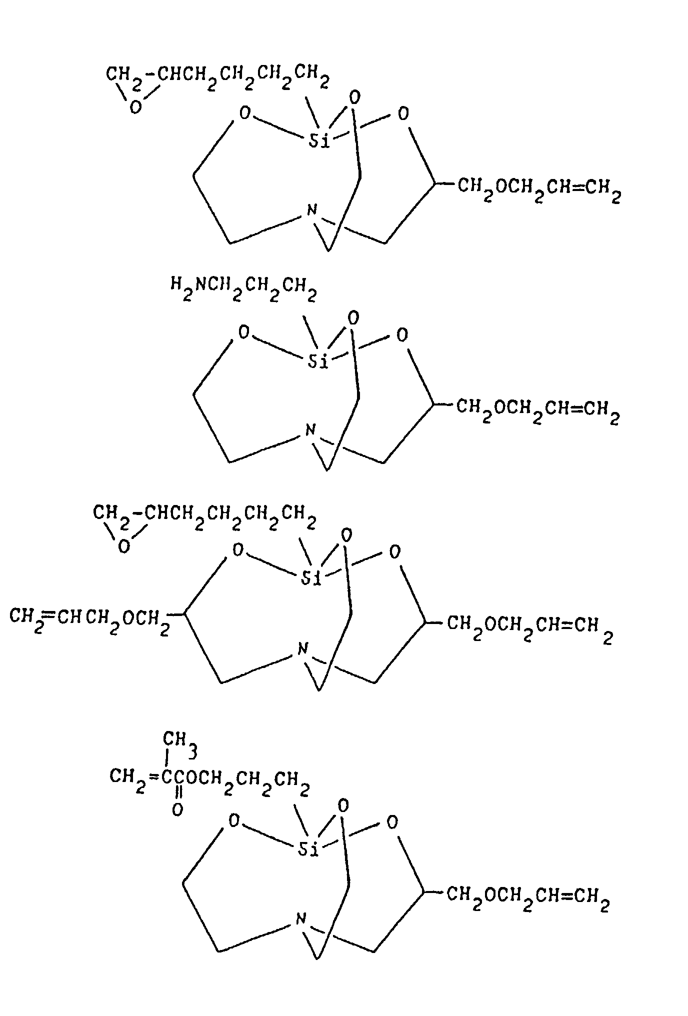

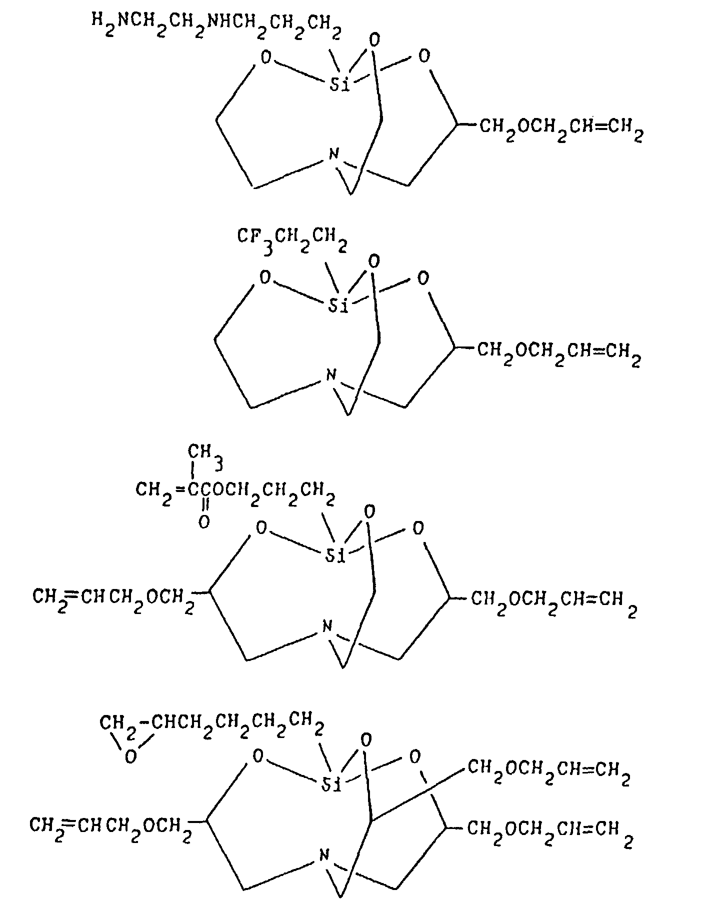

An example of the method for manufacturing the silatrane derivative comprising component C is given below.

An epoxy compound described by the general formula: 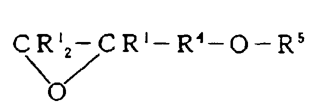 where each R¹ is independently selected from a hydrogen atom and an alkyl group, R⁴ is an alkylene group, and R⁵ is an alkenyl group and an alkoxysilane compound described by the general formula

R⁶Si(OR⁷)₃

where R⁶ is selected from the group consisting of substituted and unsubstituted monovalent hydrocarbon groups, C₁ to C₁₀ alkoxy groups, acyloxyalkyl groups, and aminoalkyl groups, and R⁷ is a C₁ to C₁₀ alkyl group; are allowed to react with ammonia or an amine compound described by the general formula:

NH_{y}(CR¹₂CR¹₂OH)_{(3-y)}

where each R¹ is independently selected from a hydrogen atom and an alkyl group, and y is 1 or 2.

The epoxy compound is a raw material for forming the skeleton of the silatrane derivative comprising component C, and is also a raw material for introducing alkenyloxyalkyl groups into the molecules of this silatrane derivative. The R¹ groups in the above formula are the same or different and are each a hydrogen atom or an alkyl group, with examples of R¹ being the same as the groups listed above. R⁴ in the above formula is an alkylene group, with examples being the same as the groups listed above for R⁴. R⁵ the above formula is an alkenyl group, with examples being the same as the groups listed above, although a C₃ to C₁₀ alkenyl group is preferred, with an allyl group being particularly favorable. Examples of epoxy compounds include allyl glycidyl ether and butenyl glycidyl ether.

The alkoxysilane compound is also a raw material for forming the skeleton of the silatrane derivative comprising component C. R⁶ in the above formula is selected from the group consisting of substituted and unsubstituted monovalent hydrocarbon groups, C₁ to C₁₀ alkoxy groups, acyloxyalkyl groups, and aminoalkyl groups. Examples of the monovalent hydrocarbon group of R⁶ are the same as the monovalent hydrocarbon groups listed above for R³, examples of the alkoxy group of R⁶ are the same as the alkoxy groups listed above for R³, examples of the acyloxyalkyl group of R⁶ are the same as the acyloxyalkyl groups listed above for R³, and examples of the aminoalkyl group of R⁶ are the same as the aminoalkyl groups listed above for R³. R⁷ in the above formula is a C₁ to C₁₀ alkyl group, examples of which include methyl, ethyl, propyl, and butyl. Examples of alkoxysilane compounds include tetramethoxysilane, tetraethoxysilane, methyltrimethoxysilane, methyltriethoxysilane, vinyltrimethoxysilane, vinyltriethoxysilane, phenyltrimethoxysilane, 3-methacryloxypropyltrimethoxysilane, 3,3,3-trifluoropropyltrimethoxysilane, nonafluorobutylethyltrimethoxysilane, 3-aminopropyltrimethoxysilane, 3-aminopropyltriethoxysilane, and N-(2-aminoethyl)-3-aminopropyltrimethoxysilane.

The ammonia or amine compound is also a raw material for forming the skeleton of the silatrane derivative of component C. In the amine compound, the R¹ groups in the above formula are each independently selected from a hydrogen atom and an alkyl group, examples of which are the same as the groups listed above. y in the formula is 1 or 2. Examples of this amine compound include 2-hydroxyethylamine, 2,2'-dihydroxyethylamine, and 2-hydroxy-2-methyl-ethylamine.

There are no restrictions on the amounts in which the epoxy compound and alkoxysilane compound are added with respect to the ammonia in the above-mentioned manufacturing method, but in order to suppress by-products and obtain the silatrane derivative at a good yield, when the reaction is conducted under conditions such that the ammonia will not be lost during the reaction, it is preferable for the epoxy compound to be used in an amount of 2 to 20 mol per mole of ammonia, with a range of 3 to 15 mol being even better. It is also preferable for the amount in which the alkoxysilane compound is added to be from 0.5 to 50 mol per mole of ammonia, with a range of 1 to 20 mol being even better. This means that it is recommended that the alkoxysilane compound be used in about a stoichiometric amount or an excess amount with respect to the ammonia in this manufacturing method. In general this excess will suppressed by-products, but an excess of alkoxysilane compound will remain behind if the alkoxysilane compound is used in an excess amount, but not so large an amount that the reaction will be slowed. This unreacted and remaining alkoxysilane compound can be separated and recovered from the silatrane derivative by distillation or the like as needed after the reaction. This reaction can also be conducted while ammonia gas is blown into the mixture of the epoxysilane compound and the alkoxy compound. When this reaction is conducted in an open system, part of the ammonia will not react and will be released outside the system, so the ammonia must be used in an excess amount large enough to compensate for this loss.

There are no restrictions on the amount in which the epoxy compound and alkoxysilane compound are added with respect to the amine compound in this manufacturing method, but in order to obtain the silatrane derivative at a good yield, when y in the amine compound is 1, the epoxy compound should be used in an amount of 0.5 to 10 mol per mole of the amine compound, with a range of 0.8 to 5 mol being even better. When y is 2 in the amine compound, the epoxy compound should be used in an amount of 1.5 to 20 mol, with a range of 1.8 to 10 mol being even better, and an amount of about 2 mol being particularly favorable. It is also preferable for the amount in which the alkoxysilane compound is added to be from 0.5 to 50 mol per mole of the amine compound, with a range of 1 to 20 mol being even better. This means that it is recommended that the alkoxysilane compound be used in about a stoichiometric amount or an excess amount with respect to the amine compound in this manufacturing method. In general, by-products will be suppressed, but an excess of alkoxysilane compound will remain behind if the alkoxysilane compound is used in an excess amount, but not so large an amount that the reaction will be slowed. The unreacted and remaining alkoxysilane compound can be separated and recovered from the silatrane derivative by distillation or the like as needed after the reaction.

In the above-mentioned manufacturing method, the reaction will proceed at normal temperature or under heating, but heating to 100°C or lower is preferred in order to shorten the reaction time. The use of an organic solvent is optional in the manufacturing method of the present invention, and examples of organic solvents that can be used include hexane, heptane, octane, and other aliphatic hydrocarbons; toluene, xylene, and other aromatic hydrocarbons; methanol, ethanol, isopropanol, and other alcohols; acetone, methyl isobutyl ketone, and other ketones; diethyl ether, tetrahydrofuran, and other ethers; ethyl acetate, isoamyl acetate, and other esters; and dimethylformamide, dimethylacetamide, and other amide compounds. In particular, the use of an alcohol such as methanol or ethanol allows the reaction time to be shortened and the targeted silatrane derivative to be obtained at a better yield. In the manufacturing method of the present invention, when an alcohol is added, it should preferable have the same number of carbon atoms as the silicon atom-bonded alkoxy groups in the raw material alkoxysilane compound in order to subject the silicon atom-bonded alkoxy groups to an alkoxy group exchange reaction. Also, when an alcohol is added in the above-mentioned manufacturing method, the reaction can be markedly shortened and the yield of the obtained silatrane derivative can be enhanced by conducting the reaction at the reflux temperature of this alcohol.

The platinum type catalyst of component D is a catalyst for curing the present composition through a hydrosilylation reaction. Examples of this platinum type catalyst of component D include platinum microparticles, chloroplatinic acid, an alcohol-modified chloroplatinic acid, a diketone complex of platinum, an olefin complex of platinum, platinum carried on a powder such as alumina, silica, or carbon black, and thermoplastic resin microparticles containing these platinum type catalysts in an amount of at least 0.01 Wt. % as platinum metal atoms. The thermoplastic resin can have a softening point of 50 to 150°C and an average diameter of the microparticles thereof of 0.01 to 10 µm. Examples of the thermoplastic resin include thermoplastic silicone resins, thermoplastic acrylic resins, thermoplastic polysilane resins, thermoplastic polystyrene resins, and thermoplastic methyl cellulose resins. A feature is that when thermoplastic resin microparticles containing at least 0.01 wt% platinum metal atoms, having a softening point of 50 to 150°C, and having an avenge diameter of 0.01 to 10 µm are used as the platinum type catalyst of component D, the storage stability of the obtained silicone rubber composition will be better and there will be very little change in viscosity even when this composition is left at room temperature for an extended period.

The amount in which component D is contained in the present composition is an amount sufficient to cure the composition, and is preferably 0.1 to 1000 weight parts of platinum metal atoms per million weight parts of component A, with a range of 0.1 to 500 weight parts being more preferable, and a range of 1 to 100 weight parts being even better. This is because the curing of the obtained silicone rubber composition will tend to be markedly slower if the component D content is below the above range, but on the other hand, there will be no pronounced increase in curing rate if the above range is exceeded, and on the contrary, there is the danger of encountering problems such as the coloration of the silicone rubber during curing.

The present composition is composed of the above-mentioned components A to D, but other components can also be added as needed, such as fumed silica, wet silica, and other such reinforcing fillers; iron oxide, rare earth compounds, and other such heat stabilizers; manganese carbonate, titanium dioxide, and other such flame retardants; quartz powder, diatomaceous earth, calcium carbonate, carbon black, and other such extending fillers; and pigments.

In order to enhance the storage stability of the present composition and make it easier to handle and work with, it can also contain an acetylene compound such as 2-methyl-3-butyn-2-ol, 2-phenyl-3-butyn-2-ol, 3-methyl-1-hexyn-3-ol, 1,5-hexadiene, or 1,6-heptadiene; an ene-ine compound such as 1-ethynyl-1-cyclohexanol, an alkenylsiloxane oligomer such as 1,3-divinyltetramethyldisiloxane, 1,3,5,7-tetravinyltetramethylcyclotetrasiloxane, or 1,3-divinyl-1,3-diphenyldimethyldisiloxane; a nitrogen-containing compound such as tributylamine, tetramethylethylenediamine, or benzotriazole; a phosphorus-containing compound such as triphenylphosphine; or a sulfur-containing compound, a hydroperoxy compound, a maleic acid derivative, or another such curing inhibitor. The amounts in which these curing inhibitors are contained should be from 0.005 to 10 weight parts per million weight pans of component A and component B combined.

The present composition is prepared by uniformly mixing the above-mentioned components A to D, but in order to enhance the storage stability of this composition near room temperature and to maintain excellent curability when the composition is used in multi-color molding or the like after storage, it is preferable for the composition to be a two-liquid type of silicone rubber composition divided into a silicone composition containing at least component A and component D but not containing component B, and a silicone composition containing at least component B but not containing component D. Component C in this case may be contained in either composition.

Because it contains component C, the present composition has excellent adhesion to polyethylene resins, polypropylene resins, saturated polyesters such as PET and PBT, polystyrene resins, AS resins, ABS resins, polyamides, polycarbonates, acrylic resins, methacrylic resins, and other such organic resins, and since the mold release properties are excellent, multi-color (such as two-color) molding, insert molding with a silicone rubber composition and an organic resin in injection molding, and other types of composite molding can be carried out more efficiently. There are no restrictions on the conditions under which the composite molding is carried out with the present composition, but it is preferable, for example, to heat the material to a temperature below the softening point of the organic resin to be composite molded, such as 150°C or lower. Nor are there any restrictions on the heating time, but a treatment lasting from a few seconds to a few minutes is favorable.

The silicone rubber composition for composite molding of the present invention will now be described in detail through working examples. The viscosity mentioned in these working examples is the value at 25°C.

Reference Example. 12.2 g (0.2 mol) of 2-hydroxyethylamine, 81.7 g (0.6 mol) of methyltrimethoxysilane, 57.1 g (0.5 mol) of allyl glycidyl ether, and 32 g of methanol were put in a 500 mL four-neck flask equipped with an agitator, a thermometer, and a reflux condenser. This system was heated and agitated for 8 hours at the reflux temperature of methanol. The total amount of the reactive mixture thus obtained was then transferred to a flask, and the low-boiling component was distilled off by rotary evaporator, which yielded 63.3 g of a faintly yellow transparent liquid. This transparent liquid was subjected to ²⁹Si-nuclear magnetic resonance analysis and ¹³C-nuclear magnetic resonance analysis, which confirmed that the silatrane derivative described by the following formula was produced. This silatrane derivative was contained in a proportion of at least 90 wt%.

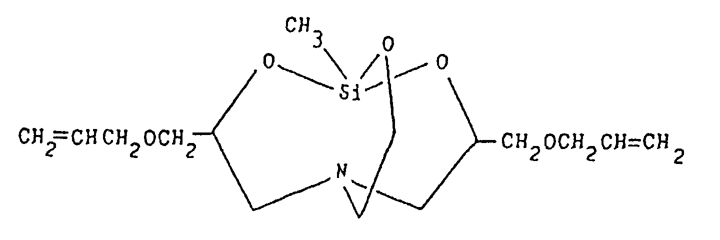

Working Example 1. 100 weight parts of a dimethylvinylsiloxy end-capped polydimethylsiloxane capped at both ends of the molecular chain and having a viscosity of 10,000 mPa · s, 30 weight parts of fumed silica with a specific surface area of 200 m²/g, 5 weight parts hexamethyldisilazane (used as a surface treatment agent for the silica), and 2 weight parts water were uniformly mixed, and were then further mixed under a vacuum while being heated for 2 hours at 170°C. After cooling, 1 weight part of the silatrane derivative prepared in Reference Example 1, 2.6 weight parts of a trimethylsiloxy end-capped dimethylsiloxane · methylhydrogensiloxane copolymer capped at both ends of the molecular chain and having five silicon atom-bonded hydrogen atoms per molecule and a viscosity of 5 mPa · s (the amount of this copolymer was such that the ratio of the number of moles of silicon atom-bonded hydrogen atoms in the copolymer to the number of moles of silicon atom-bonded vinyl groups in the above-mentioned polydimethylsiloxane was 4.7:1), 0.06 weight part 3-methyl-1-hexyn-3-ol, and a 1,3-divinyltetramethyldisioxane solution of a 1,3-divinyltetramethyldisiloxane complex of platinum, used in an amount such that there were 7 weight parts of platinum metal atoms per million weight parts of the above-mentioned polydimethylsiloxane, were mixed with 100 weight parts of the base compound obtained above to prepare a silicone rubber composition. An organic resin test piece of the composition described in Table 1 was then placed in a chrome-plated mold, the above-mentioned silicone rubber composition was injected from above, and the material was heated for 10 minutes at 120°C to cure the composition. The adhesion of the material to the organic resins and its mold release properties were observed, the results of which are given in Table 1. To evaluate the adhesion of the silicone rubber to organic resins, the silicone rubber was peeled away from the organic resin, and a "○" was given if the silicone rubber underwent cohesive failure, whereas an "X" was given if the peeling occurred at the interface of the silicone rubber. In the evaluation of the mold release properties of the silicone rubber, a "○" was given if the silicone rubber came away from the mold easily, with no cohesive failure, whereas an "X" was given if the silicone rubber underwent cohesive failure and partially adhered to the mold. The silicone rubber composition was allowed to stand for 3 days at room temperature, and the change in viscosity was checked. These results are all given in Table 1.

Comparative Example 1. Other than not adding the silatrane derivative used in Working Example 1, a silicone rubber composition was prepared in the same manner as in Working Example 1. The adhesion of this silicone rubber composition to organic resins and its mold release properties were evaluated in the same manner as in Working Example 1. This silicone rubber composition was allowed to stand for 3 days at room temperature, and the change in viscosity was checked. These results are all given in Table 1.

Working Example 2. 1 weight part of the silatrane derivative prepared in Reference Example 1, 2.6 weight pans of a trimethylsiloxy end-capped dimethylsiloxane · methylhydrogensiloxane copolymer capped at both ends of the molecular chain and having five silicon atom-bonded hydrogen atoms per molecule and a viscosity of 5 mPa · s (the amount of this copolymer was such that the ratio of the number of moles of silicon atom-bonded hydrogen atoms in the copolymer to the number of moles of silicon atom-bonded vinyl groups in the above-mentioned polydimethylsiloxane was 4.7:1), 0.06 weight pan 3-methyl-1-hexyn-3-ol, and thermoplastic silicone resin microparticles (the softening point of the silicone resin was 85°C, and the average diameter of the microparticles was 1 µm) containing a 1,3-divinyltetramethyldisiloxane complex of platinum, used in an amount such that there were 7 weight parts of platinum metal atoms per million weight parts of the above-mentioned polydimethylsiloxane, were mixed with 100 weight parts of the base compound prepared in Working Example 1 to prepare a silicone rubber composition. The adhesion of this silicone rubber composition to organic resins and its mold release properties were evaluated in the same manner as in Working Example 1. This silicone rubber composition was allowed to stand for 3 days at room temperature, and the change in viscosity was checked. These results are all given in Table 1.

Comparative Example 2. Other than adding vinyltrimethoxysilane instead of the silatrane derivative used in Working Example 1, a silicone rubber composition was prepared in the same manner as in Working Example 1. The adhesion of this silicone rubber composition to organic resins and its mold release properties were evaluated in the same manner as in Working Example 1. This silicone rubber composition was allowed to stand for 3 days at room temperature, and the change in viscosity was checked. These results are all given in Table 1.

Working Example 3. 90 weight parts of a dimethylvinylsiloxy end-capped polydimethylsiloxane capped at both ends of the molecular chain and having a viscosity of 10,000 mPa · s, 10 weight parts of a dimethylvinylsiloxy end-capped polydimethylsiloxane · methylvinylsiloxane copolymer capped at both ends of the molecular chain and having a viscosity of 340 mPa · s, 30 weight parts of fumed silica with a specific surface area of 200 m²/g, 5 weight parts hexamethyldisilazane (used as a surface treatment agent for the silica), and 2 weight parts water were uniformly mixed, and were then further mixed under a vacuum while being heated for 2 hours at 170°C. After cooling, 1 weight part of the silatrane derivative prepared in Reference Example 1, 8 weight parts of a dimethylhydrogensiloxy end-capped polydimethylsiloxane capped at both ends of the molecular chain and having a viscosity of 10 mPa · s (the amount of this polymer was such that the ratio of the number of moles of silicon atom-bonded hydrogen atoms in the polydimethylsiloxane to the number of moles of silicon atom-bonded vinyl groups in the above-mentioned dimethylhydrogensiloxy group-capped polydimethylsiloxane copolymer capped at both ends of the molecular chain was 1.7:1), 0.06 weight part 3-methyl-1-hexyn-3-ol, and a 1,3-divinyltetramethyldisiloxane solution of a 1,3-divinyltetramethyldisiloxane complex of platinum, used in an amount such that there were 7 weight parts of platinum metal atoms per combined million weight parts of the above-mentioned dimethylhydrogensiloxy end-capped polydimethylsiloxane copolymer capped at both ends of the molecular chain and the dimethylvinylsiloxy group-capped polydimethylsiloxane · methylvinylsiloxane copolymer capped at both ends of the molecular chain, were mixed with 100 weight parts of the base compound obtained above to prepare a silicone rubber composition. The adhesion of this silicone rubber composition to organic resins and its mold release properties were evaluated in the same manner as in Working Example 1. This silicone rubber composition was allowed to stand for 3 days at room temperature, and the change in viscosity was checked. These results are all given in Table 1.

**Table 1**

| | Working Ex.1 | Working Ex.2 | Working Ex.3 | Comp. Ex.1 | Comp. Ex.2 |
|---|---|---|---|---|---|
| Adhesion to organic resins | | | | | |
| Nylon-6 resin | ○ | ○ | ○ | X | ○ |
| Polypropylene resin | ○ | ○ | ○ | X | ○ |
| Polybutylene terephthalate resin | ○ | ○ | ○ | X | ○ |
| Polycarbonate resin | ○ | ○ | ○ | X | ○ |
| Mold release properties | ○ | ○ | ○ | ○ | X |
| Change in viscosity of silicone rubber comp. | Cured | not cured | cured | cured | cured |

## Claims

1. A silicone rubber composition for composite molding comprising
(A) 100 weight parts of a polydiorganosiloxane having at least two silicon atom-bonded alkenyl groups per molecule;
(B) a polyorganosiloxane having at least two silicon atom-bonded hydrogen atoms per molecule in an amount such that the ratio of the number of moles of hydrogen atoms bonded to silicon atoms in this component to the number of moles of alkenyl groups bonded to silicon atoms in component (A) is between 0.5:1 and 20:1;
(C) 0.1 to 10 weight parts of a silatrane derivative described by general formula: 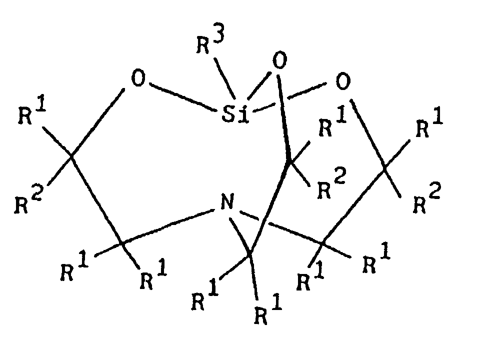 where each R¹ is independently selected from a hydrogen atom and an alkyl group; each R² is independently selected from the group consisting of a hydrogen atom, alkyl groups, and alkenyloxyalkyl groups described by general formula
-R⁴-O-R⁵
where R⁴ is an alkylene group and R⁵ is an alkenyl group; at least one R² is an alkenyloxyalkyl group; and R³ is a group selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups; and
(D) a platinum type catalyst in an amount sufficient to cure the composition.

2. A silicone rubber composition for composite molding according to Claim 1, where component (D) comprises thermoplastic resin microparticles containing a platinum type catalyst in an amount of at least 0.01 wt% as platinum metal atoms, the softening point of the thermoplastic resin being within a range of 50 to 150°C, and the average diameter of the microparticles being within a range of 0.01 to 10 µm.

3. A silicone rubber composition according to Claim 1, where component (C) is selected from the group consisting of silatranes described by formulas

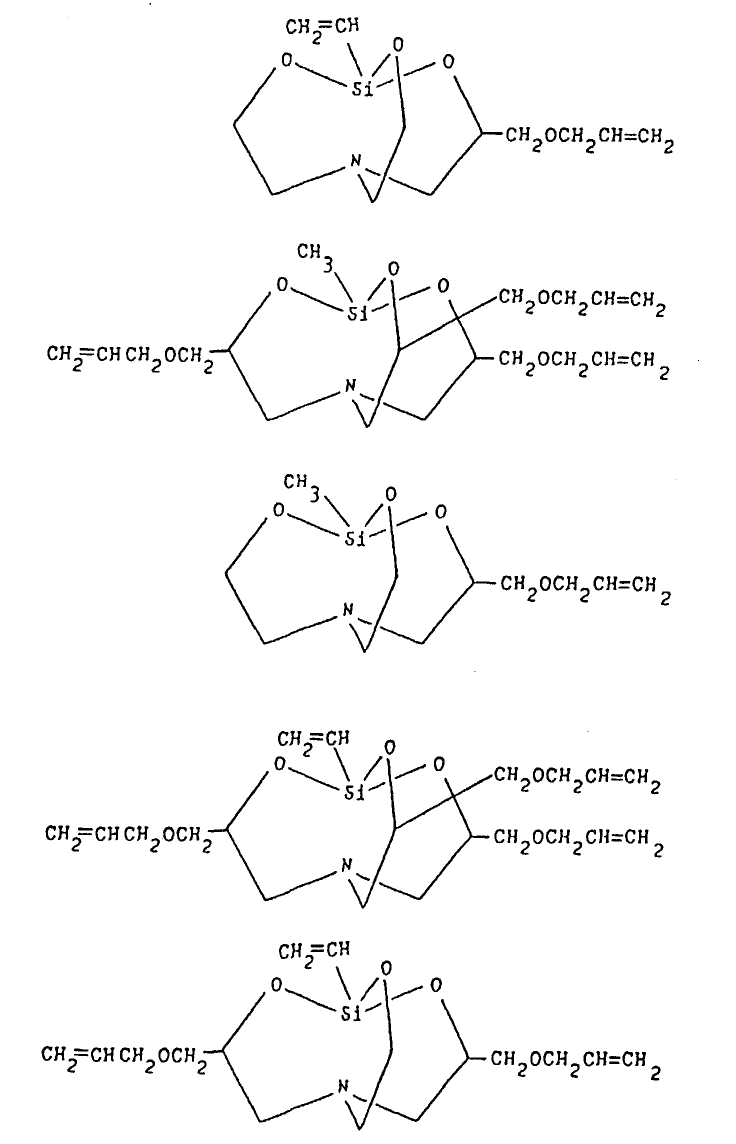

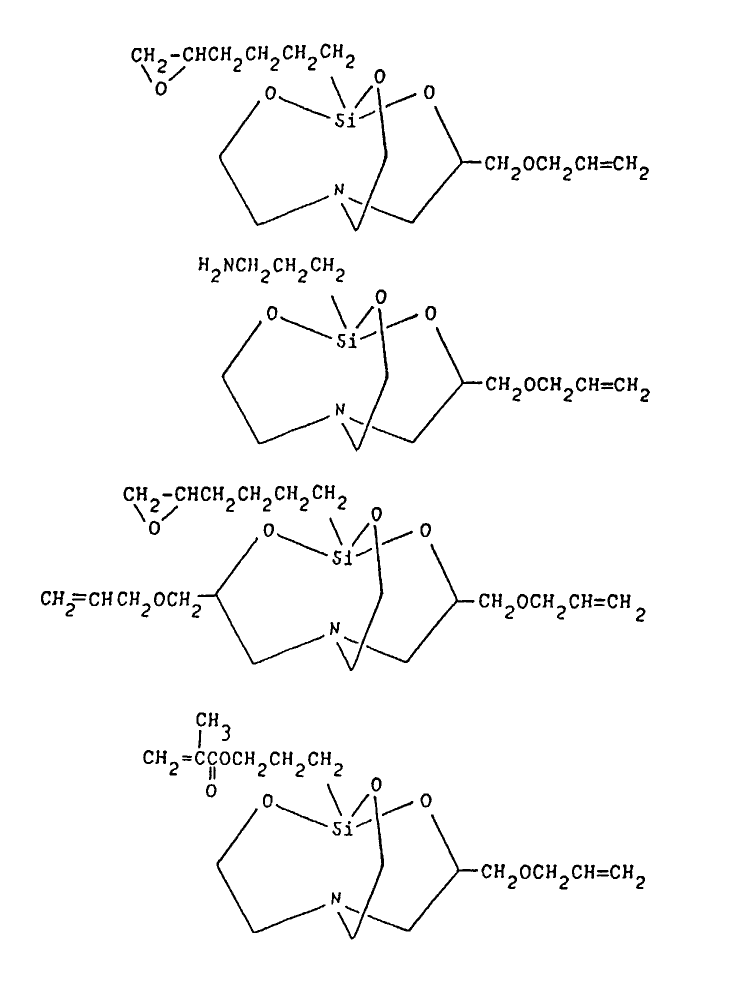

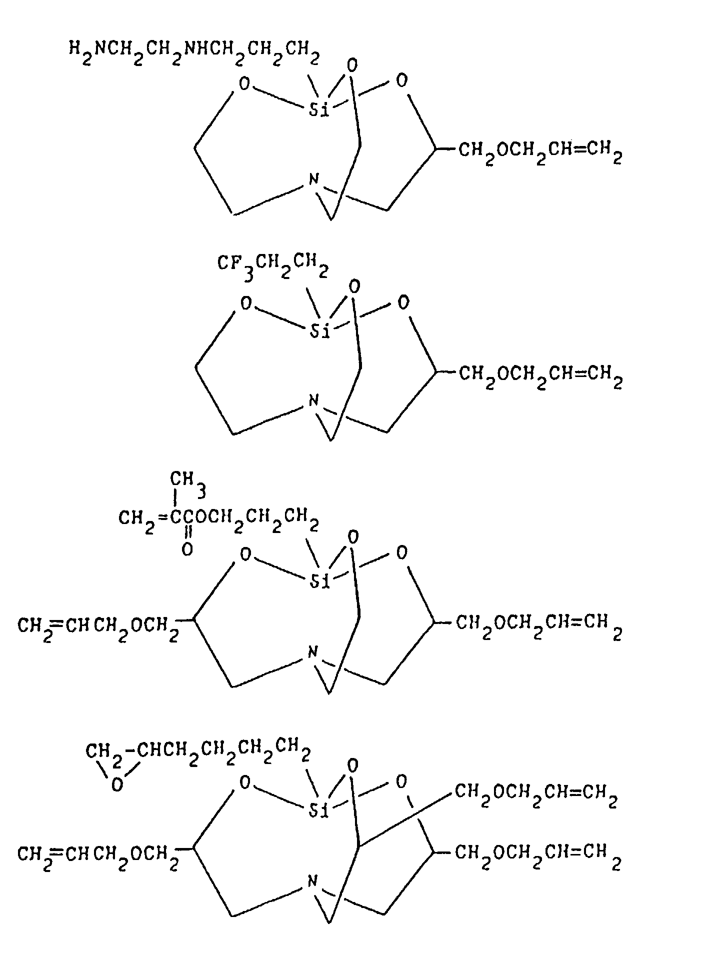

4. A silicone rubber composition according to Claim 2, where component (C) is selected from the group consisting of silatranes described by formulas
